# EUROPÄISCHE PATENTANMELDUNG

(11) **EP 1 655 437 A1**
(43) Veröffentlichungstag der Anmeldung: **10.05.2006**
(21) Anmeldenummer: 05022224.9
(22) Anmeldetag: 12.10.2005
(51) Int. Cl.: E05F 15/12, B60J 5/10

(54) **Antriebsanordnung zur Betätigung einer Klappe eines Kraftfahrzeugs**

(30) Priorität: 03.11.2004 DE 202004017178 U
(71) Anmelder: Brose Schliesssysteme GmbH & Co. KG, 42369 Wuppertal (DE)
(72) Erfinder: Güler, Mehmet, 45661 Recklinghausen (DE)
(74) Vertreter: Gesthuysen, von Rohr & Eggert

(57) **Zusammenfassung**

Die Erfindung betrifft eine Antriebsanordnung zur Betätigung einer Klappe eines Kraftfahrzeugs mit einem Antrieb, wobei die Klappe an der Karosserie des Kraftfahrzeugs um eine Klappenachse schwenkbar angelenkt und dadurch eine Klappenöffnung der Karosserie verschließbar ist, wobei der Antrieb zur Erzeugung von Antriebsbewegungen einen Antriebsmotor und ein nachgeschaltetes Getriebe aufweist und wobei mit einer Antriebsbewegung - Betätigungsbewegung - die Verstellung der Klappe zwischen einer Öffnungsstellung und einer Schließstellung bewirkbar ist. Es wird vorgeschlagen, daß das Getriebe einen ersten Abtriebshebel und einen zweiten Abtriebshebel zur Übertragung von Druckkräften und/oder Zugkräften auf die Klappe aufweist, daß die Abtriebshebel im montierten Zustand an einer an der Klappe angeordneten Gelenkanordnung zusammenlaufen und mit dieser antriebstechnisch gekoppelt sind und daß die Kraftwirkungslinien der beiden Abtriebshebel miteinander einen der jeweiligen Stellung der Klappe entsprechenden Winkel - Abtriebswinkel - einschließen.

## Beschreibung

Die vorliegende Erfindung betrifft eine Antriebsanordnung zur Betätigung einer Klappe eines Kraftfahrzeugs mit den Merkmalen des Oberbegriffs von Anspruch 1 sowie eine Klappenanordnung, insbesondere eine Heckklappenanordnung, eines Kraftfahrzeugs mit der obigen Antriebsanordnung gemäß dem Oberbegriff von Anspruch 22.

Der Begriff "Klappe" eines Kraftfahrzeugs ist vorliegend umfassend zu verstehen. Entsprechend fallen hierunter nicht nur die Heckklappe, der Kofferraumdeckel, die Motorhaubenklappe oder Laderaumklappe eines Kraftfahrzeugs, sondern beispielsweise auch die Seitentüren, oder ein gegebenenfalls vorhandenes Hubdach eines Kraftfahr-ceugs. Die in Rede stehende Klappe ist an der Karosserie des Kraftfahrzeugs um eine Schwenkachse schwenkbar angelenkt, wodurch eine Klappenöffnuag der Karosserie verschließbar ist.

Es darf darauf hingewiesen werden, daß die oben angesprochene Karosserie des Kraftfahrzeugs bei der vorliegenden Darstellung die Klappe nicht mit einschließt, Die Klappe des Kraftfahrzeugs ist also vorliegend nicht Bestandteil der Karosserie des Kraftfahrzeugs.

Die motorische Betätigung von Klappen eines Kraftfahrzeugs, also die motorische Öffnungsbewegung und Schließbewegung, gewinnt heute für die Komfortsteigerung eines Kraftfahrzeugs zunehmend an Bedeutung.

Eine bekannte Antriebsanordnung zur motorischen Betätigung der Klappe eines Kraftfahrzeugs (DE 101 17 935 A1), von der die Erfindung ausgeht, weist zur Erzeugung der für die Betätigung der Klappe erforderlichen Antriebsbewegungen, im folgenden Betätigungsbewegungen genannt, einen Antriebsmotor mit einem nachgeschalteten Getriebe auf, das als Spindelgetriebe mit Spindel und Spindelmutter ausgestaltet ist. Die Spindelmutter ist über einen Umlenkhebel antriebstechnisch mit der Klappe gekoppelt. Vorteilhaft ist hier die Tatsache, daß die von der Antriebsanordnung auf die Klappe wirkende Antriebskraft keine oder eine nur geringe Komponente in Richtung der Klappenachse aufweist. Eine solche Komponente der Antriebskraft führt nämlich grundsätzlich zu einer ungewünschten Belastung der beteiligten Komponenten. Allerdings ist die Verwendung einer Spindel-Mutter-Übersetzung mit hohen Realisierungskosten, geringer Robustheit und insbesondere einem hohen Verschleiß verbunden. Ferner läßt sich die Betätigungsgeschwindigkeit in nur beschränktem Maße erhöhen. Die Leistungsfähigkeit der Antriebsanordnung ist dadurch insgesamt eingeschränkt.

Der Erfindung liegt das Problem zugrunde, die bekannte Antriebsanordnung derart auszugestalten und weiterzubilden, daß deren Leistungsfähigkeit gesteigert wird, ohne notwendigerweise eine axiale Kraftwirkung der Antriebsanordnung auf die Klappe in Kauf nehmen zu müssen. Mit "axialer Kraftwirkung" ist dabei eine Kraftwirkung in Richtung der Klappenachse gemeint.

Das obige Problem wird durch eine Antriebsanordnung mit den Merkmalen von Anspruch 1 gelöst.

Wesentlich ist hier die Erkenntnis, daß sich bei entsprechender Anordnung der Abtriebshebel die axiale Kraftwirkung des einen Abtriebshebels gegen die axiale Kraftwirkung des anderen Abtriebshebels aufheben kann. Die Betätigungsbewegungen der beiden Abtriebshebel lassen sich auf einfache Weise steuern, so daß eine leistungsfähige und gleichzeitig robuste Antriebsanordnung realisierbar ist.

Die beiden Abtriebshebel dienen der Übertragung von Druckkräften und/oder von Zugkräften auf die Klappe, wobei die Kraftwirkungslinien der beiden Abtriebshebel miteinander einen der jeweiligen Stellung der Klappe entsprechenden Winkel einschließen. Dieser Winkel wird im folgenden als Abtriebswinkel bezeichnet.

Die bevorzugten Ausgestaltungen gemäß Anspruch 2 gewährleisten eine vollständige Eliminierung einer axialen Kranwirkung der Antriebsanordnung auf die Klappe.

Die weiter bevorzugte Ausgestaltung gemäß Anspruch 3 zeigt die Kombination zweier Antriebshebel mit den Abtriebshebeln nach Art einer Scherenkinematik. Hiermit lassen sich auf einfache Weise weitgehend beliebige Übersetzungsverhältnisse des Getriebes erzielen.

Eine besonders robuste und gleichzeitig kompakte Ausgestaltung ist Gegenstand von Anspruch 8. Hier ist die antriebstechnische Kopplung zwischen dem Antriebsmotor und dem Getriebe auf besonders einfache Weise realisiert.

Die weiter bevorzugte Ausgestaltung der Antriebsanordnung mit einem Linearantrieb gemäß Anspruch 10 kann je nach Anwendungsfall zu einer optimalen Bauraumausnutzung sowie zu einem optimalen Übertragungsverhalten des Getriebes führen. Das Getriebe kann ohne weiteres so ausgelegt werden, daß die Beanspruchung der Spindel-Mutter-Übersetzung und damit der hiermit verbundene Verschleiß gering ist. Die beiden Verbindungsgelenke zwischen Antriebshebel und Abtriebshebel sind hier auf einer entsprechenden Führungsschiene geführt.

Eine weitere Möglichkeit der Ausgestaltung des Getriebes mit Führungsschiene zeigt Anspruch 11. Durch diese besondere Ausgestaltung ist die Erstreckung der Führungsschiene besonders gering.

Für die Ausgestaltung der Gelenkanordnung sowie der Verbindungsgelenke zwischen Antriebshebel und Abtriebshebel sind zahlreiche Möglichkeiten denkbar. In besonders bevorzugter Ausgestaltung kommen hier Kardangelenke in Betracht.

Es kann aber auch vorgesehen werden, daß hier Gelenke mit zwei zueinander senkrecht ausgerichteten Gelenkachsen zum Einsatz kommen, wobei die beiden Gelenkachsen der Verbindungsgelenke voneinander beabstandet sind. Dann ist allerdings, gegebenenfalls durch ein zusätzliches Kugelgelenk oder dergleichen, sicherzustellen, daß hinreichende Bewegungs-Freiheitsgrade gewährleistet sind.

Insgesamt ist es so, daß die hier vorhandene konstruktive Freiheit bei der Auslegung der Kopplung von den Antriebshebeln über die Abtriebshebel bis hin zu der Klappe eine optimale Anpassung an die jeweiligen Bauraumverhältnisse ermöglicht. Beispielsweise läßt sich durch eine geeignete Auslegung erreichen, daß auf einen üblicherweise an der Klappe vorgesehenen Umlenkhebel vollständig verzichtet werden kann.

Im folgenden wird die Erfindung anhand von Ausführungsbeispielen näher erläutert. In der Zeichnung zeigt
- Fig. 1: das Heck eines Kraftfahrzeugs bei geschlossener Klappe mit einer erfindungsgemäßen Antriebsanordnung in einer Seitenansicht,
- Fig. 2: die Antriebsanordnung gemäß Fig. 1 im demontierten Zustand in einer perspektivischen Ansicht,
- Fig. 3: eine zweite erfindungsgemäße Antriebsanordnung im demontierten Zustand in einer Draufsicht,
- Fig. 4: eine dritte erfindungsgemäße Antriebsanordnung im demontierten Zustand in einer Draufsicht

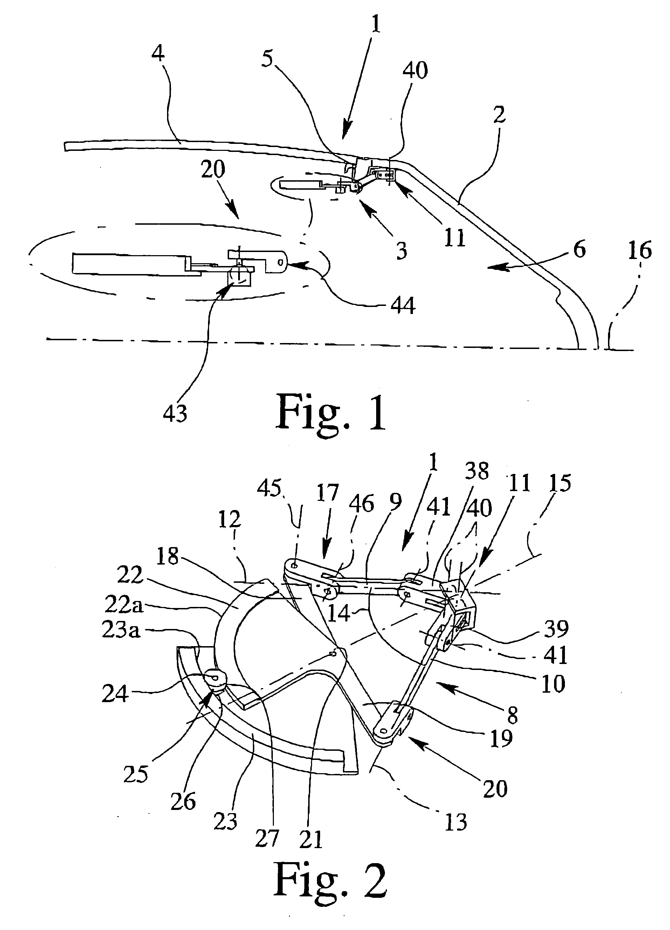

Die in Fig. 1 dargestellte Antriebsanordnung 1 befindet sich im montierten Zustand. Sie dient der Betätigung der Klappe 2 des dargestellten Kraftfahrzeugs und weist hierfür einen Antrieb 3 auf. Grundsätzlich kann auch vorgesehen sein, daß mehrere Antriebe 3, vorzugsweise zwei jeweils vorzugsweise seitlich angeordnete Antriebe 3 zur Betätigung der Klappe 2 vorgesehen sind.

Die Klappe 2 ist an der Karosserie 4 des Kraftfahrzeugs um eine Klappenachse 5 schwenkbar angelenkt, wodurch die Klappenöffnung 6 der Karosserie 4 verschließbar ist. Es darf darauf hingewiesen werden, daß, wie oben beschrieben, der Begriff "Klappe" vorliegend umfassend zu verstehen ist. Insbesondere im Hinblick auf eine optimale Bauraumausnutzung läßt sich die erfindungsgemäße Antriebsanordnung 1 jedoch besonders vorteilhaft auf die Heckklappe oder den Kofferraumdeckel eines Kraftfahrzeugs anwenden.

Der Antrieb 3 ist zur Erzeugung von Antriebsbewegungen mit einem Antriebsmotor 7 sowie mit einem dem Antriebsmotor 7 nachgeschalteten Getriebe 8 ausgestattet. Durch eine entsprechende Antriebsbewegung ist die Verstellung der Klappe 2 zwischen einer nicht dargestellten Öffnungsstellung und der in Fig. 1 dargestellten Schließstellung bewirkbar. Diese Antriebsbewegung wird im folgenden "Betätigungsbewegung" genannt.

Das Getriebe 8 weist einen ersten Abtriebshebel 9 und einen zweiten Abtriebshebel 10 zur Übertragung von Druckkräften und/oder Zugkräften auf die Klappe 2 auf Im in Fig. 1 dargestellten und insoweit bevorzugten Ausführungsbeispiel werden über die Abtriebshebel 9, 10 ausschließlich Druckkräfte übertragen. Die Abtriebshebel 9, 10 laufen im montierten Zustand an einer an der Klappe 2 angeordneten Gelenkanordnung 11 zusammen und sind mit dieser antriebstechnisch gekoppelt. Die Kraftwirkungslinien 12, 13 der beiden Abtriebshebel 9, 10 schließen miteinander einen der jeweiligen Stellung der Klappe 2 entsprechenden Winkel ein, der im folgenden Abtriebswinkel 14 genannt wird.

Fig. 2 zeigt die Antriebsanordnung 1 im demontierten Zustand bei in der Schließstellung befindlicher Klappe. Es läßt sich den Fig. 1 und 2 entnehmen, daß eine Verstellung der Klappe 2 von der Schließstellung in die Öffnungsstellung eine Verkleinerung des Abtriebswinkels bewirkt.

In besonders bevorzugter Ausgestaltung liegt die Winkelhalbierende des Abtriebswinkels 14 im wesentlichen in einer senkrecht ausgerichteten Ebene. Mit "senkrechter Ausrichtung" ist hier eine Ausrichtung senkrecht zur Ebene des Fahrzeugdaches oder des Fahrzeugbodens gemeint. Der Antrieb 3 ist vorzugsweise so angeordnet, daß diese senkrecht ausgerichtete Ebene gleichzeitig die Fahrzeuglängsachse 16 schneidet. Grundsätzlich ist es aber auch denkbar, daß die Winkelhalbierende des Abtriebswinkels 14 von der Fahrzeuglängsachse 16 beabstandet ist. Dies ist insbesondere dann der Fall, wenn zwei seitlich angeordnete Antriebe 3 vorgesehen sind.

Die Anordnung ist nun vorzugsweise so getroffen, daß die von der Antriebsanordnung 1 auf die Klappe 2 wirkende Antriebskraft keine Komponente in Richtung der Klappenachse 5 aufweist. In bestimmten Anwendungsfällen kann es aber auch vorteilhaft sein, wenn eine gewisse Kraftwirkung in axialer Richtung besteht, beispielsweise um Spiel zwischen der Klappe 2 und der Karosserie 4 zu vermeiden. Vorteilhaft ist bei der vorgeschlagenen Lösung die Tatsache, daß diese axiale Kraftwirkung durch eine entsprechende Auslegung genau vorbestimmt werden kann.

Eine ganz besonders einfache mechanische Ansteuerung der Abtriebshebel 9, 10 erreicht man durch die Realisierung einer Scherenkinematik. Dabei ist der erste Abtriebshebel 9 über ein erstes Verbindungsgelenk 17 mit einem ersten Antriebshebel 18 und der zweite Abtriebshebel 10 mit einem zweiten Antriebshebel 19 über ein zweites Verbindungsgelenk 20 schwenkbar gekoppelt. Mit "schwenkbar gekoppelt" ist hier eine Kopplung gemeint, die das Verschwenken in einem oder mehreren Freiheitsgraden erlaubt.

Bei dem in Fig. 2 dargestellten und insoweit bevorzugten Ausführungsbeispiel ist es vorgesehen, daß beide Antriebshebel 18, 19 mit dem in Fig. 2 nicht dargestellten Antriebsmotor 7 antriebstechnisch gekoppelt sind.

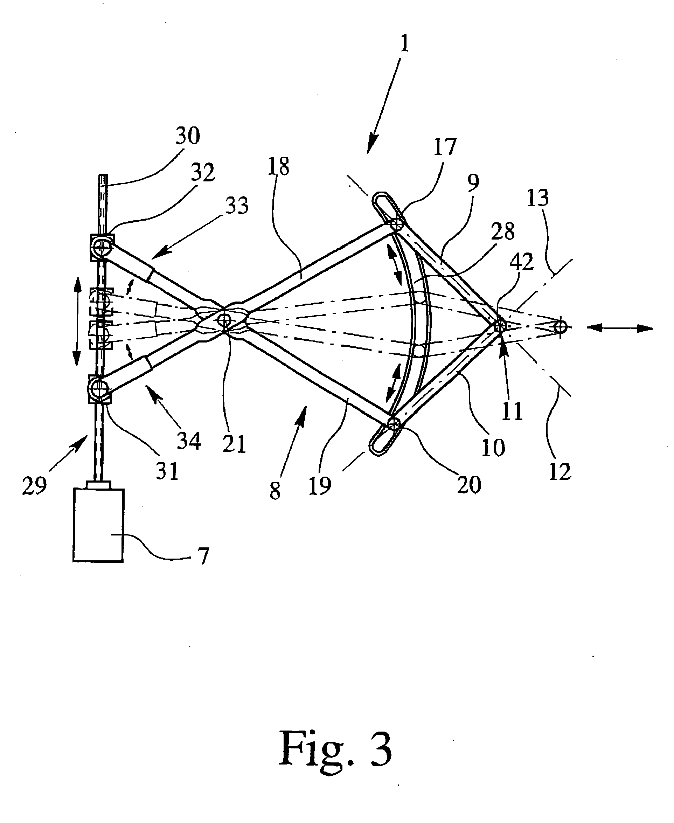

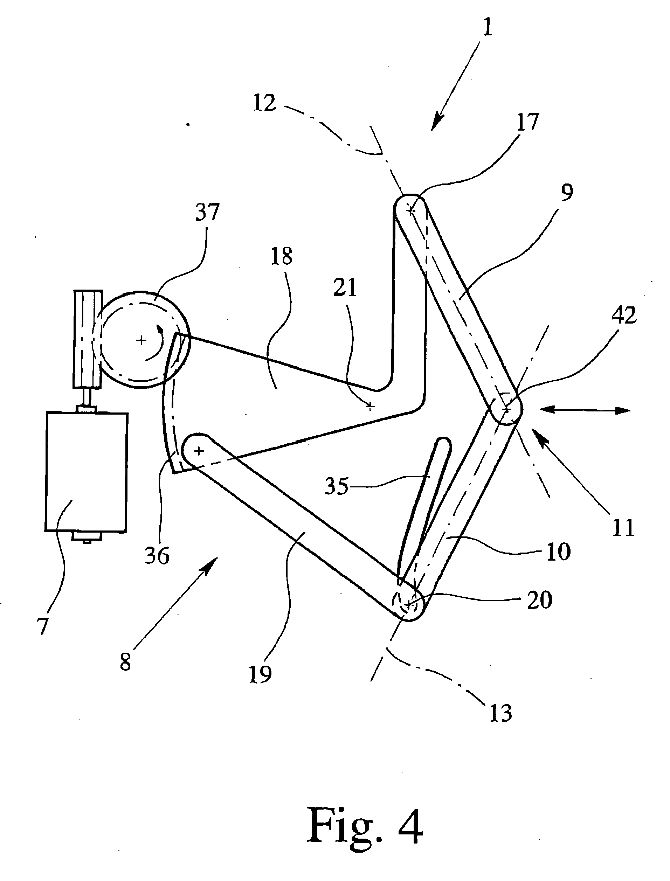

Die oben im Zusammenhang mit den Fig. 1 und 2 erläuterte Grundstruktur der Antriebsanordnung 1 findet sich auch bei den in den Fig. 3 und 4 dargestellten, weiteren bevorzugten Ausführungsbeispielen. Insoweit darf auf die obigen Ausführungen verwiesen werden. Dabei darf darauf hingewiesen werden, daß bei den in den Fig. 3 und 4 dargestellten Ausführungsbeispielen nur ein Teil der Gelenkanordnung 11 dargestellt ist, wie noch gezeigt wird.

Allen dargestellten Ausführungsbeispielen ist es gemein, daß jedenfalls der erste Antriebshebel 18 um eine Schwenkachse 21 schwenkbar ist, die zwischen den beiden Enden des ersten Antriebshebels 9 liegt. Mit "Enden" eines Hebels sind vorliegend die Krafteinleitungspunkte bzw. -bereiche des Hebels gemeint.

Bei den in Fig. 2 und 3 dargestellten Ausführungsbeispielen ist auch der zweite Antriebshebel 19 um eine im Hinblick auf die Enden der Hebel 18, 19 entsprechend angeordnete Schwenkachse 21 schwenkbar, wobei hier die dem Antriebshebel 18 zugeordnete Schwenkachse 21 identisch zu der dem zweiten Antriebshebel 19 zugeordneten Schwenkachse 21 ist. Bei den in den Fig. 2 und 4 dargestellten Ausführungsbeispielen ist die Schwenkachse 21 ortsfest ausgestaltet.

Die in den Fig. 2 und 3 dargestellten Ausführungsbeispiele sind so ausgestaltet, daß die beiden Antriebshebel 18, 19 bei der Betätigung der Klappe 2 gegenläufige Bewegungen durchführen. Ein bevorzugter Winkelbereich für die Bewegungen der Antriebshebel 18, 19 liegt bei etwa 70°.

Die obige Gegenläufigkeit der beiden Antriebshebel 18, 19 kann für eine besonders kompakte Kopplung des Antriebsmotors 7 mit dem Getriebe 8 ausgenutzt werden. Dies ist in Fig. 1 dargestellt. Dabei sind die dem jeweiligen Abtriebshebel 9, 10 abgewandten Enden der Antriebshebel 18, 19 jeweils mit einem kreisbogenförmigen, um die Schwenkachse 21 der Antriebshebel 18, 19 herum ausgerichteten Zahnsegment 22, 23 ausgestattet. Bei der in Fig. 2 darstellten und insoweit bevorzugten Ausgestaltung weist das eine Zahnsegment 22 eine Außenverzahnung 22a und das andere Zahnsegmet 23 eine dieser Außenverzahnung 22a zugewandte Innenverzahnung 23a auf. Dem hier nicht dargestellten Antriebsmotor 7 ist ein um eine Drehachse 24 drehbares Antriebsritzel 25 zugeordnet, wobei das Antriebsritzel 25 des Antriebsmotors 7 mit beiden Zahnsegmenten 22, 23 in antriebtechnischem Eingriff steht.

Um zu gewährleisten, daß eine Drehbewegung des Antriebsritzels 25 in beiden Antriebshebeln 18, 19 zueinander betragsmäßig identische Antriebsbewegungen bewirkt, ist das Antriebsritzel 25 in Richtung seiner Drehachse 24 gesehen zweigeteilt. Es weist für beide Zahnsegmente 22, 23 einen jeweils unterschiedlichen Ritzeldurchmesser auf. Dabei ist dem die Außenverzahnung 22a aufweisenden Zahnsegment 22 ein im Durchmesser kleinerer Ritzelabschnitt 26 und dem die Innenverzahnung 23a aufweisenden Zahnsegment 23 ein im Durchmesser größerer Ritzelabschnitt 27 zugeordnet.

Für die motorische Betätigung der in Fig. 1 dargestellten Klappe 2 von der Schließstellung in die Öffnungsstellung ist das Antriebsritzel 25 in Fig. 2 rechts herum zu betätigen. Dadurch schließt sich die von den Antriebshebeln 18, 19 und Abtriebshebeln 9, 10 gebildete Schere und die über die Abtriebshebel 9, 10 übertragene Antriebskraft bewirkt entsprechend das Verschwenken der Klappe 2. Hier wird deutlich, daß die Übersetzung des Getriebes 8 bei der motorischen Verstellung der Klappe 2 in die Öffnungsstellung stetig zunimmt, so daß für das Halten der Klappe 2 in der Öffnungsstellung eine vergleichsweise geringe, vom Antriebsmotor 7 bzw. von einer gegebenenfalls vorhandenen Bremse aufzubringende Haltekraft erforderlich ist.

Das in Fig. 3 dargestellte Ausführungsbeispiel zeigt eine bevorzugte Variante für eine Scherenkinematik. Hier ist es vorgesehen, daß die beiden Verbindungsgelenke 17, 20 zwischen dem ersten Antriebshebel 18 und dem ersten Abtriebshebel 9 sowie zwischen dem zweiten Antriebshebel 19 und dem zweiten Abtriebshebel 10 in einer kreisbogenförmigen, um die Schwenkachse 21 der Antriebshebel 18, 19 herum ausgerichteten Führungsschiene 28 geführt sind. Bei der Betätigung der Klappe 2 bewegt sich die Schwenkachse 21 in Fig. 3 nach links bzw. nach rechts.

Bei dem in Fig. 3 dargestellten Ausführungsbeispiel ist eine besondere Kopplung des Antriebsmotors 7 mit dem Getriebe 8 vorgesehen. Die dem jeweiligen Abtriebshebel 9, 10 abgewandten Enden der Antriebshebel 18, 19 sind hier nämlich antriebstechnisch mit einem Linearantrieb 29 gekoppelt. Der Linearantrieb 29 weist vorzugsweise eine Antriebsschnecke 30 auf, auf der zwei Mitnehmer 31, 32 laufen. Die Mitnehmer 31, 32 sind antriebstechnisch mit jeweils einem Antriebshebel 18, 19 gekoppelt. Hierfür ist entsprechend eine teleskopartige Kopplung 33, 34 zwischen den Mitnehmern 31, 32 und dem jeweiligen Antriebshebel 18, 19 vorgesehen. Die Antriebsschnecke 30 ist entlang ihrer Drehachse gesehen zweigeteilt, wobei die beiden Teile zueinander gegenläufige Schneckengewinde aufweisen. Dies ist erforderlich, um die oben angesprochene gegenläufige Bewegung der Antriebshebel 18, 19 gewährleisten zu können. Die nähere Ausgestaltung der Verbindungsgelenke 17, 20 sowie der Gelenkanordnung 11 wird weiter unten noch angesprochen.

Das in Fig. 4 dargestellte, bevorzugte Ausführungsbeispiel zeigt eine weitere Variante für die Ausgestaltung der Antriebsanordnung 1. Hier ist der zweite Antriebshebel 19 hinsichtlich der Schwenkachse 21 des ersten Antriebshebels 18 exzentrisch am ersten Antriebshebel 18 angelenkt. Ferner ist das zweite Verbindungsgelenk 20 zwischen dem zweiten Antriebshebel 19 und dem zweiten Abtriebshebel 10 in einer bogenförmigen Führungsschiene 25 geführt. Vorteilhaft ist bei dieser Anordnung insbesondere die Tatsache, daß die Erstreckung der Führungsschiene 25 bei entsprechender Auslegung der Hebel 9, 10, 18, 19 entsprechend gering gewählt werden kann. Bei dem in Fig. 4 dargestellten und insoweit bevorzugten Ausführungsbeispiel ist das dem ersten Abtriebshebel 9 abgewandte Ende des ersten Antriebshebels 18 mit einem kreisbogenförmigen, um die Schwenkachse 21 des ersten Antriebshebels 18 herum ausgerichteten Zahnsegment 36 ausgestattet. Entsprechend weist der Antriebsmotor 7 ein Antriebsritzel 37 auf, das antriebstechnisch in Eingriff mit dem Zahnsegment 36 steht.

Es läßt sich zusammenfassen, daß bei allen dargestellten Ausführungsbeispielen die Antriebsbewegungen der beiden Antriebshebel 18, 19 über die beiden Abtriebshebel 9, 10 eine motorische Verstellung der Klappe 2 bewirken. Dabei ist es so, daß sich die Antriebsbewegungen der Antriebshebel 18, 19 vorzugsweise parallel zu einer einzigen Ebene vollziehen. Diese Bewegungen werden über die Abtriebshebel 9, 10 in eine entsprechende Schwenkbewegung der Klappe 2 umgesetzt. Dies stellt ganz besondere Anforderungen an die Kopplung von den Antriebshebeln 18, 19 über die Abtriebshebel 8, 10 bis hin zu der Klappe 2.

Für die Kopplung zwischen den Antriebshebeln 18, 19 und den Abtriebshebeln 9, 10 sowie weiter zwischen den Abtriebshebeln 9, 10 und der Klappe 2 sind die oben angesprochenen Verbindungsgelenke 17, 20 und die Gelenkanordnung 11 vorgesehen. Für die dargestellten Ausführungsbeispiele sind eine Reihe von Möglichkeiten denkbar, wie die Verbindungsgelenke 17, 20 und die Gelenkanordnung 11 ausgestaltet sein können. Im folgenden werden hierzu einige bevorzugte Varianten vorgestellt, die auf alle drei dargestellten Ausführungsbeispiele gleichermaßen anwendbar sind.

Bei dem in Fig. 2 dargestellten Ausführungsbeispiel weist die Gelenkanordnung 11 ein erstes Gelenk 38 für die Kopplung mit dem ersten Abtriebselement 9 und ein zweites Gelenk 39 für die Kopplung mit dem zweiten Abtriebselement 10 auf, wobei die Gelenke 38, 39 der Gelenkanordnung 11 vorzugsweise zwei Bewegungs-Freiheitsgrade aufweisen. Im dargestellten Ausführungsbeispiel ist es so, daß die Gelenke 38, 39 der Gelenkanordnung 11 jeweils eine erste Gelenkachse 40 und eine zweite Gelenkachse 41 aufweisen, die starr miteinander gekoppelt und zueinander senkrecht ausgerichtet sind. In besonders bevorzugter Ausgestaltung handelt sich bei diesen Gelenken 38, 39 der Gelenkanordnung 11 um Kardangelenke.

Es kann aber auch vorgesehen sein, daß die beiden Gelenkachsen 39, 40 eines Gelenks 38, 39 der Gelenkanordnung 11 voneinander beabstandet sind. Dies ist in Fig. 2 dargestellt. Dem Gelenk 38, 39 ist dann eine Längsachse zugeordnet, die beide Gelenkachsen 40, 41 im senkrechten Winkel schneidet. Ein Verschwenken der Klappe 2 um die Klappenachse 5 bewirkt hier unter anderem ein Verschwenken des Gelenks 38, 39 um seine Längsachse. Hierdurch ist ein zusätzlicher Bewegungs-Freiheitsgrad bei der Kopplung zwischen dem Antriebshebel 18, 19 und der Klappe 2 vorzusehen. Eine Möglichkeit hierfür besteht darin, daß die Gelenke 38, 39 der Gelenkanordnung 11 zumindest zum Teil als Kugelgelenk ausgestaltet sind. Die Gelenke 38, 39 der Gelenkanordnung 11 können aber auch jeweils vollständig als Kugelgelenk ausgestaltet sein. Es sind aber auch andere Gelenkarten anwendbar, soweit sie die entsprechenden Bewegungs-Freiheitsgrade bereitstellen.

In dem in Fig. 2 dargestellten Ausführungsbeispiel ist jeweils die erste Gelenkachse 40 der beiden Gelenke 38, 39 der Gelenkanordnung 11 im montierten Zustand im wesentlichen senkrecht zu der Klappenachse 5 ausgerichtet. Weiter sind die ersten Gelenkachsen 40 im montierten Zustand vorzugsweise parallel zueinander ausgerichtet.

Die Gelenkanordnung 11 kann auch so ausgestaltet sein, daß mindestens eines ihrer Gelenke 38, 39 im montierten Zustand parallel zu der Klappenachse 5 ausgerichtete Gelenkachsen aufweist. Dies ist beispielsweise für die in den Fig. 3 und 4 dargestellten Ausführungsbeispiele besonders vorteilhaft, Hier sind die den Antriebshebeln 18, 19 abgewandten Enden der Abtriebshebel 9, 10 über eine Gelenkachse 42 eines Gelenks der Gelenkanordnung 11 miteinander gekoppelt. Da hier auch die Verbindungsgelenke 17, 20 zwischen den Antriebshebeln 18, 19 und den Abtriebshebeln 9, 10 einachsige Schwenkgelenke sind, erzeugt die Antriebsanordnung 1 an der Gelenkachse 42 ausschließlich lineare Antriebsbewegungen, wie es auch bei einem Spindelantrieb der Fall sein würde. Dann ist die Ausstattung der Gelenkanordnung 11 mit Gelenken, die parallel zu der Klappenachse 5 ausgerichtete Gelenkachsen aufweisen, erforderlich. Grundsätzlich kann es auch vorgesehen werden, daß die Gelenke 38, 39 der Gelenkanordnung 11 zumindest teilweise zu einem einzigen Gelenk zusammengefaßt sind. Dies betrifft insbesondere die ersten Gelenkachsen 40 der Gelenke 38, 39.

Die oben zu den Gelenken 38, 39 angestellten Überlegungen gelten gleichermaßen für die Ausgestaltung der Verbindungsgelenke 17, 20 zwischen den Antriebshebeln 18, 19 und den Abtriebshebeln 9, 10. Insbesondere können diese Verbindungsgelenke 17, 20, wie in den Fig. 3 und 4 dargestellt, als einachsige Schwenkgelenke ausgestaltet sein. Im übrigen sind aber auch alle oben angesprochenen Gelenkarten anwendbar.

Eine bevorzugte Ausgestaltung der Verbindungsgelenke 17, 20 ist in Fig. 1 dargestellt. Hier ist das Verbindungsgelenk 17, 20 einerseits als Kugelgelenk 43 und andererseits als Schwenkgelenk 44 ausgestaltet. Das Schwenkgelenk 44 weist hier zwei starr miteinander gekoppelte, zueinander senkrecht ausgerichtete Gelenkachsen 45, 46 auf, die voneinander beabstandet sind. Insoweit darf auf die Ausführungen zu den Gelenken 38, 39 der Gelenkanordnung 11 verwiesen werden. Die Ausstattung der Verbindungsgelenke 17, 20 mit einem Kugelgelenk 43 ist also eine weitere Möglichkeit, wie der oben angesprochene, durch die Schwenkbewegung der Klappe 2 erforderliche zusätzliche Bewegungs-Freiheitsgrad realisiert sein kann.

Es darf darauf hingewiesen werden, daß der oben beschriebene, symmetrische Aufbau insbesondere hinsichtlich der Abtriebshebel 9, 10 zu einer besonders günstigen Krafteinleitung auf die Klappe 2, vorzugsweise ohne resultierende axiale Kraftwirkung auf die Klappe 2, führt. Grundsätzlich kann es aber auch vorgesehen werden, daß eine "Hälfte" der Scherenkinematik schlichtweg weggelassen wird. Dies ist dann gewissermaßen eine "Low-Cost-Variante".

Wesentlich für die flache Bauweise der erfindungsgemäßen Antriebsanordnung 1 ist die Tatsache, daß die Schwenkachse 21 bzw. die Schwenkachsen der Antriebshebel 18, 19 im wesentlichen senkrecht zu der Klappenachse 5 ausgerichtet ist bzw. sind. Die für die Realisierung einer Scherenkinematik erforderliche Mindesterstreckung ist dann entlang einer Ebene parallel zu der Klappenachse 5 ausgerichtet. Dies ist besonders vorteilhaft, da in dieser Erstreckungsrichtung üblicherweise hinreichend Bauraum vorhanden ist. Ein Beispiel hierfür ist der Bereich des hinteren Dachrahmens der Karosserie 4.

Ferner darf darauf hingewiesen werden, daß im montierten Zustand die Gelenkanordnung 11, in Querrichtung des Kraftfahrzeugs gesehen, vorzugsweise im mittleren Bereich des Kraftfahrzeugs und vorzugsweise nahe der Klappenachse 5 angeordnet ist. Dies führt zu einer mittigen Krafteinleitung in die Klappe 2, was beispielsweise den Verzug der Klappe 2 bei deren motorischen Betätigung verhindert.

Schließlich darf darauf hingewiesen werden, daß bei der in Fig. 1 dargestellten Antriebsanordnung 1 auf einen Umlenkhebel an der Klappe 2 vollständig verzichtet werden kann. Dies wird durch eine spezielle Ausgestaltung der Gelenkanordnung 11 sowie der Verbindungsgelenke 17, 20 gewährleistet. Durch diese spezielle Anordnung läßt sich zudem der üblicherweise erforderliche Übergang der Abtriebshebel 9, 10 von einem Trockenraum in den Naßraum der Karosserie 4 bzw. der Klappe 2 mit einer entsprechenden Durchführung vermeiden. Dies wird erreicht durch eine entsprechend abgesenkte Positionierung des Antriebsmotors 7 und der Antriebshebel 18, 19, wie ebenfalls in Fig. 1 dargestellt.

Eine weitere Lehre, der eigenständige Bedeutung zukommt, betrifft eine Heckklappenanordnung eines Kraftfahrzeugs, die alles umfaßt, was für das Erreichen der oben beschriebenen Vorteile notwendig ist Dazu gehören unter anderem die Klappe 2, der Teil der Karosserie 4 des Kraftfahrzeugs, der die Klappenöffnung 6 enthält, sowie die oben beschriebenen Antriebsanordnungen 1. Auf die obigen Ausführungen darf verwiesen werden.

## Patentansprüche

1. Antriebsanordnung zur Betätigung einer Klappe (2) eines Kraftfahrzeugs mit einem Antrieb (3),
wobei die Klappe (2) an der Karosserie (4) des Kraftfahrzeugs um eine Klappenachse (5) schwenkbar angelenkt und **dadurch** eine Klappenöffnung (6) der Karosserie (4) verschließbar ist,
wobei der Antrieb (3) zur Erzeugung von Antriebsbewegungen einen Antriebsmotor (7) und ein nachgeschaltetes Getriebe (8) aufweist und wobei mit einer Antriebsbewegung - Betätigungsbewegung - die Verstellung der Klappe (2) zwischen einer Öffnungsstellung und einer Schließstellung bewirkbar ist,
**dadurch gekennzeichnet,**
**daß** das Getriebe (8) einen ersten Abtriebshebel (9) und einen zweiten Abtriebshebel (10) zur Übertragung von Druckkräften und/oder Zugkräften auf die Klappe (2) aufweist, daß die Abtriebshebel (9, 10) im montierten Zustand an einer an der Klappe (2) angeordneten Gelenkanordnung (11) zusammenlaufen und mit dieser antriebstechnisch gekoppelt sind und daß die Kraftwirkungslinien (12, 13) der beiden Abtriebshebel (9, 10) miteinander einen der jeweiligen Stellung der Klappe (2) entsprechenden Winkel - Abtriebswinkel (14) - einschließen.

2. Antriebsanordnung nach Anspruch 1, **dadurch gekennzeichnet, daß** die Winkelhalbierende (15) des Abtriebswinkels (14) im wesentlichen in einer senkrecht ausgerichteten, vorzugsweise die Fahrzeuglängsachse (16) schneidenden Ebene liegt und/oder, vorzugsweise, daß die Anordnung so getroffen ist, daß die von der Antriebsanordnung (1) auf die Klappe (2) wirkende Antriebskraft keine Komponente in Richtung der Klappenachse (5) aufweist.

3. Antriebsanordnung nach Anspruch 1 oder 2, **dadurch gekennzeichnet, daß** der erste Abtriebshebel (9) über ein erstes Verbindungsgelenk (17) mit einem ersten Antriebshebel (18) und der zweite Abtriebshebel (10) mit einem zweiten Antriebshebel (19) über ein zweites Verbindungsgelenk (20) schwenkbar gekoppelt ist und daß jedenfalls einer der beiden Antriebshebel (19, 20), vorzugsweise beide Antriebshebel (19, 20), mit dem Antriebsmotor (7) antriebstechnisch gekoppelt ist bzw. sind.

4. Antriebsanordnung nach Anspruch 3, **dadurch gekennzeichnet, daß** der erste Antriebshebel (18) um eine Schwenkachse (21) schwenkbar ist und daß die Schwenkachse (21) zwischen den beiden Enden des ersten Antriebshebels (18) liegt, und/oder, daß der zweite Antriebshebel (19) um eine Schwenkachse (21) schwenkbar ist und daß die Schwenkachse (21) zwischen den beiden Enden des zweiten Antriebshebels (19) liegt.

5. Antriebsanordnung nach Anspruch 4, **dadurch gekennzeichnet, daß** die dem ersten Antriebshebel (18) zugeordnete Schwenkachse (21) identisch zu der dem zweiten Antriebshebel (19) zugeordneten Schwenkachse (21) ist.

6. Antriebsanordnung nach Anspruch 4 oder 5, **dadurch gekennzeichnet, daß** die dem ersten Antriebshebel (18) und/oder dem zweiten Antriebshebel (19) zugeordnete Schwenkachse (21) ortsfest ausgestaltet ist.

7. Antriebsanordnung nach Anspruch 5 und ggf. nach Anspruch 6, **dadurch gekennzeichnet, daß** die beiden Antriebshebel (18, 19) bei der Betätigung der Klappe (2) gegenläufige Bewegungen durchführen, vorzugsweise, daß die Bewegungen der Antriebshebel (18, 19) bei der Betätigung der Klappe (2) jeweils einen Winkelbereich von etwa 70° umfassen.

8. Antriebsanordnung nach einem der Ansprüche 3 bis 7, **dadurch gekennzeichnet, daß** die dem jeweiligen Abtriebshebel (9, 10) abgewandten Enden der Antriebshebel (18, 19) jeweils mit einem kreisbogenförmigen, um die Schwenkachse (21) der Antriebshebel (18, 19) herum ausgerichteten Zahnsegment (22, 23) ausgestattet sind, vorzugsweise, daß das eine Zahnsegment (22) eine Außenverzahnung (22a) und das andere Zahnsegment (23) eine dieser Außenverzahnung (22a) zugewandte Innenverzahnung (23a) aufweist, daß der Antriebsmotor (7) ein um eine Drehachse (24) drehbares Antriebsritzel (25) aufweist und daß das Antriebsritzel (25) des Antriebsmotors (7) mit beiden Zahnsegmenten (22, 23) in antriebstechnischem Eingriff steht, weiter vorzugsweise, daß das Antriebsritzel (25) in Richtung seiner Drehachse (24) gesehen zweigeteilt ist und für beide Zahnsegmente (22, 23) einen jeweils unterschiedlichen Ritzeldurchmesser bereitstellt.

9. Antriebsanordnung nach einem der Ansprüche 3 bis 8, **dadurch gekennzeichnet, daß** die beiden Verbindungsgelenke (17, 20) zwischen dem ersten Antriebshebel (18) und dem ersten Abtriebshebel (9) sowie zwischen dem zweiten Antriebshebel (19) und dem zweiten Abtriebshebel (10) in einer kreisbogenförmigen, um die Schwenkachse (21) der Antriebshebel (18, 19) herum ausgerichteten Führungsschiene (28) geführt sind.

10. Antriebsanordnung nach einem der Ansprüche 3 bis 9, **dadurch gekennzeichnet, daß** die dem jeweiligen Abtriebshebel (9, 10) abgewandten Enden der Antriebshebel (18, 19) antriebstechnisch mit einem Linearantrieb (29) gekoppelt sind, vorzugsweise, daß der Linearantrieb (29) eine Antriebsschnecke (30) aufweist, auf der zwei Mitnehmer (31, 32) laufen und daß die Mitnehmer (31, 32) antriebstechnisch mit jeweils einem Antriebshebel (18, 19) gekoppelt sind.

11. Antriebsanordnung nach einem der Ansprüche 3 bis 10, **dadurch gekennzeichnet, daß** der zweite Antriebshebel (19) hinsichtlich der Schwenkachse (21) des ersten Antriebshebels (18) exzentrisch am ersten Antriebshebel (18) angelenkt ist und daß das zweite Verbindungsgelenk (20) zwischen dem zweiten Antriebshebel (19) und dem zweiten Abtriebshebel (10) in einer bogenförmigen Führungsschiene (35) geführt ist.

12. Antriebsanordnung nach einem der Ansprüche 3 bis 11, **dadurch gekennzeichnet, daß** das dem ersten Abtriebshebel (9) abgewandte Ende des ersten Antriebshebels (18) mit einem kreisbogenförmigen, um die Schwenkachse (21) des ersten Antriebshebels (18) herum ausgerichteten Zahnsegment (36) ausgestattet ist und daß der Antriebsmotor (7) ein Antriebsritzel (37) aufweist, das antriebstechnisch in Eingriff mit dem Zahnsegment (36) steht.

13. Antriebsanordnung nach einem der vorhergehenden Ansprüche, **dadurch gekennzeichnet, daß** die Gelenkanordnung (11) mindestens ein Gelenk (38, 39) für die Kopplung mit dem ersten Abtriebshebel (9) und mit dem zweiten Abtriebshebel (10) aufweist, vorzugsweise, daß die Gelenkanordnung (11) ein erstes Gelenk (38) für die Kopplung mit dem ersten Abtriebshebel (9) und ein zweites Gelenk (39) für die Kopplung mit dem zweiten Abtriebshebel (10) aufweist, weiter vorzugsweise, daß die Gelenke (38, 39) der Gelenkanordnung (11) zwei Bewegungs-Freiheitsgrade aufweisen, weiter vorzugsweise, daß die Gelenke (38, 39) der Gelenkanordnung (11) jeweils erste und zweite starr miteinander gekoppelte, zueinander senkrecht ausgerichtete Gelenkachsen (40, 41) aufweisen, weiter vorzugsweise, daß es sich bei den Gelenken (38, 39) um Kardangelenke handelt

14. Antriebsanordnung nach Anspruch 13, **dadurch gekennzeichnet, daß** die Gelenke (38, 39) der Gelenkanordnung (11) zumindest zum Teil als Kugelgelenk ausgestaltet sind.

15. Antriebsanordnung nach Anspruch 3 und ggf. nach einem der Ansprüche 4 bis 14, **dadurch gekennzeichnet, daß** die den Antriebshebeln (18, 19) abgewandten Enden der Abtriebshebel (9, 10) über eine Gelenkachse (42) eines Gelenks der Gelenkanordnung (11) miteinander gekoppelt sind.

16. Antriebsanordnung nach Anspruch 3 und ggf. nach einem der Ansprüche 4 bis 15, **dadurch gekennzeichnet, daß** die Verbindungsgelenke (17, 20) jeweils erste und zweite starr miteinander gekoppelte, zueinander senkrecht ausgerichtete Gelenkachsen (45, 46) aufweisen, wobei die erste Gelenkachse (45) eine Anlenkung an dem Abtriebshebel (9, 10) und wobei die zweite Gelenkachse (46) eine Anlenkung an dem Antriebshebel (18, 19) bereitstellt, vorzugsweise, daß es sich bei den Verbindungsgelenken um Kardangelenke (17, 20) handelt.

17. Antriebsanordnung nach Anspruch 16, **dadurch gekennzeichnet, daß** die Verbindungsgelenke (17, 20) zumindest zum Teil als Kugelgelenk ausgestaltet sind.

18. Antriebsanordnung nach Anspruch 3 und ggf. nach einem der Ansprüche 4 bis 17, **dadurch gekennzeichnet, daß** der zweite Antriebshebel (19) und der zweite Abtriebshebel (10) nicht vorgesehen sind.

19. Antriebsanordnung nach Anspruch 3 und ggf. nach einem der Ansprüche 4 bis 18, **dadurch gekennzeichnet, daß** die Schwenkachse (21) bzw. die Schwenkachsen der Antriebshebel (18, 19) im wesentlichen senkrecht zu der Klappenachse (5) ausgerichtet ist bzw. sind.

20. Antriebsanordnung nach einem der vorhergehenden Ansprüche, **dadurch gekennzeichnet, daß** im montierten Zustand der Antriebsmotor (7) im Bereich des hinteren Dachrahmens der Karosserie (4) angeordnet ist.

21. Antriebsanordnung nach einem der vorhergehenden Ansprüche, **dadurch gekennzeichnet, daß** im montierten Zustand die Gelenkanordnung (11) in Querrichtung des Kraftfahrzeugs gesehen im mittleren Bereich des Kraftfahrzeugs und vorzugsweise nahe der Klappenachse (5) angeordnet ist.

22. Klappenanordnung, insbesondere Heckklappenanordnung, eines Kraftfahrzeugs, wobei die Klappenanordnung eine Klappe (2) und eine Klappenöffnung (6) in der Karosserie (4) des Kraftfahrzeugs aufweist, wobei die Klappe (2) an der Karosserie (4) um eine Klappenachse (5) schwenkbar angelenkt und **dadurch** die Klappenöffnung (6) verschließbar ist,
**dadurch gekennzeichnet,**
**daß** eine Antriebsanordnung (1) mit den Merkmalen eines oder mehrerer der vorhergehenden Ansprüche zur Betätigung der Klappe (2) vorgesehen ist.
